(19) Europäisches Patentamt
European Patent Office
Office européen des brevets

(11) **EP 4 585 959 A1**

(12) **EUROPEAN PATENT APPLICATION**

(43) Date of publication:
**16.07.2025 Bulletin 2025/29**

(21) Application number: **24209681.6**

(22) Date of filing: **30.10.2024**

(51) International Patent Classification (IPC):
**G01S 7/35** $^{(2006.01)}$     **G01S 13/931** $^{(2020.01)}$

(52) Cooperative Patent Classification (CPC):
**G01S 7/356; G01S 7/354; G01S 13/931**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **09.01.2024 US 202418408114**

(71) Applicant: **Aptiv Technologies AG**
**8200 Schaffhausen (CH)**

(72) Inventors:
• **AHMED, Ammar**
**8200 Schaffhausen (CH)**
• **ZHANG, Xin**
**8200 Schaffhausen (CH)**

(74) Representative: **Bardehle Pagenberg**
**Partnerschaft mbB**
**Patentanwälte Rechtsanwälte**
**Prinzregentenplatz 7**
**81675 München (DE)**

(54) **SPECTRAL PEAK ESTIMATION USING FOURIER COEFFICIENT INTERPOLATION**

(57)     A method includes calculating a discrete Fourier transform (DFT) of radar signals received by radar elements. The method includes identifying a peak amplitude of the DFT and designating a frequency corresponding to the peak amplitude of the DFT as an initial frequency estimate. The method includes selecting first and second neighboring points of the DFT based on the initial frequency estimate. The method includes generating first and second values based on amplitudes of the first and second neighboring points of the DFT. The method includes calculating a generalized interpolation value based on a generalized discrete DFT interpolation. The generalized discrete DFT interpolation is based on the first value, the second value, and the peak amplitude. The method includes generating a fine frequency estimate of the input radar signals by summing the initial frequency estimate and the generalized interpolation value.

Incoming Signals

Sensor array — 230

Signal Conditioning Module — 234

Preprocessing Module — 238

Sampling Module — 242

Intermediate Processing Module — 246

Frequency Estimation Module — 250

Angle Estimation Module — 254

Angle Estimate

**FIG. 2B**

EP 4 585 959 A1

**Description**

FIELD

The present disclosure relates to frequency-domain signal processing and more particularly to estimation of characteristics such as frequency or angle from incoming radar signals.

BACKGROUND

Frequency domain (spectral) peak estimation is useful in a variety of technical applications, such as frequency estimation and angle estimation. For example, a radar system transmits signals and detects the signals as they rebound off objects. Frequency estimation can be used to determine the distance (and in some implementations, the velocity) of an object from the radar system (specifically, the distance from the radar system sensor array). Based on the frequency estimation, the differences between the detected and transmitted signal are determined and used to calculate the distance to the object and the object's velocity.

In various implementations, angle estimation may be used to determine the angular location of an object with respect to the radar system. Angle estimation relies on spatial differences between two more elements in the radar sensor array. By measuring the difference in arrival time of a detected signal at the sensor elements, the direction of arrival of the radar signal can be calculated.

In comparison to other types of sensors, such as cameras, radars provide improved performance in difficult environmental conditions, such as low lighting, fog, and/or with moving or overlapping objects. Accordingly, radars provide many advantages for driver assistance applications and/or autonomous driving applications, among others.

As described above, radar signals generally require processing and analysis before data can be used for driver assistance applications and/or autonomous driving applications. For example, Fourier Transform (FT) is an integral part of direction-of-arrival (DOA) estimation (also referred to as angle estimation) and range-Doppler processing schemes. In order to achieve reasonable estimation accuracy, a fine FT grid is generally desired, resulting in an increased computational burden. Existing methods are either accurate but require specific criteria to be met, or are inaccurate but do not require specific criteria to be met. For example, the interpolation method in Fast Iterative Interpolated Beamforming (FIIB) requires double the number of Discrete Fourier Transform (DFT) points as the number of data samples (which are determined by the number of array sensors or channels when it comes to angle estimation) - for example, six temporal samples or spatial sensors would require twelve DFT points. This requirement limits the system to specific configurations and can lower computational efficiency because it is often desirable for the number of DFT points to be a power of two (e.g., 2, 4, 8, 16, etc.). As another example, parabolic interpolation does not require a specific number of sensors or DFT points, but assumes a parabolic model for the signals, which leads to errors when the signals are sinusoidal or otherwise non-parabolic. Therefore, a solution is needed that can be applied to any number of DFT points and sensors and remains accurate.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

SUMMARY

A method of processing input radar signals received by a plurality of radar elements includes calculating a discrete Fourier transform (DFT) of the input radar signals. The method includes identifying a peak amplitude of the DFT. The method includes designating a frequency corresponding to the peak amplitude of the DFT as an initial frequency estimate. The method includes selecting a first neighboring point of the DFT based on the initial frequency estimate. The method includes selecting a second neighboring point of the DFT based on the initial frequency estimate. The method includes generating a first value based on an amplitude of the first neighboring point of the DFT. The method includes generating a second value based on an amplitude of the second neighboring point of the DFT. The method includes calculating a generalized interpolation value based on a generalized discrete DFT interpolation. The generalized discrete DFT interpolation is based on the first value, the second value, and the peak amplitude. The method includes generating a fine frequency estimate of the input radar signals by summing the initial frequency estimate and the generalized interpolation value.

In other features, the method includes determining an angle estimate based on the fine frequency estimate. In other features, the first neighboring point corresponds to a lower frequency than the initial frequency estimate. The second neighboring point corresponds to a higher frequency than the initial frequency estimate. In other features, the DFT includes an ordered set of frequencies arranged from a lowest frequency to a highest frequency. The ordered set of frequencies includes the initial frequency estimate, the lower frequency, and the higher frequency. The lower frequency is immediately prior to the initial frequency estimate in the ordered set of frequencies. The higher frequency is immediately subsequent to the initial frequency estimate in the ordered set of frequencies.

In other features, generating the first value and generating the second value includes determining whether a set of phase adjustment criteria has been met. It also includes, in response to a determination that the set of phase adjustment criteria has been met, calculating a real component of the first neighboring point of the DFT, and calculating a real component of the second neighboring point of the DFT. In other features, generating the first value and generating the second value includes, in response to a determination that the set of phase adjustment criteria has not been met, calculating an absolute value of the amplitude of the first neighboring point of the DFT, and calculating an absolute value of the amplitude of the second neighboring point of the DFT. In other features, the plurality of radar elements is $N$ radar elements. The DFT has $K$ frequency points. The set of phase adjustment criteria includes a criterion that is met when $K$ is greater than or equal to $N$ and less than 2N.

In other features, the method includes selectively performing a refinement operation, including selecting a third neighboring point of the DFT based on the initial frequency estimate. The third neighboring point is between the first neighboring point and the initial frequency estimate. The refinement operation includes selecting a fourth neighboring point of the DFT based on the initial frequency estimate. The fourth neighboring point is between the second neighboring point and the initial frequency estimate. The refinement operation includes generating a third value based on the amplitude of the first neighboring point and the third neighboring point. The refinement operation includes generating a fourth value based on the amplitude of the second neighboring point and the fourth neighboring point. The refinement operation includes determining a refined peak amplitude of the DFT based on the third value and the fourth value. The refinement operation includes designating a second frequency corresponding to the refined peak amplitude as a refined initial frequency estimate. The refinement operation includes calculating a refined generalized interpolation value based on a refined generalized discrete DFT interpolation. The refined generalized discrete DFT interpolation is based on the third value, the fourth value, and the refined peak amplitude. The refinement operation includes generating a refined frequency estimate of the input radar signals by summing the refined initial frequency estimate and the refined generalized interpolation value.

In other features, the plurality of radar elements is $N$ radar elements. The DFT has $K$ frequency points. The refinement operation is performed only in response to a determination that $K$ is (i) greater than or equal to $N$ *and* (ii) less than 2N. In other features, the refinement operation is performed only in response to a determination that $K$ is (i) greater than $N$ and (ii) less than 2N. In other features, the refinement operation is performed only in response to a configuration being present that enables the refinement operation.

In other features, the plurality of radar elements is $N$ radar elements. The DFT has $K$ frequency points. The generalized discrete DFT interpolation is based on $N$ and $K$. In other features, the generalized discrete DFT interpolation is based on a quotient of one over $K$, the peak amplitude, a sum of the first value and the second value, and a difference of the first value and the second value. In other features, the generalized discrete DFT interpolation is defined as

$$\delta = \frac{1}{\pi}\tan^{-1}\left(\frac{(S_{-x}^{\text{real}} - S_{+x}^{\text{real}})\sin\pi x}{2\,S_{\max}\cos\pi Nx - (S_{-x}^{\text{real}} + S_{+x}^{\text{real}})\cos\pi x}\right)$$

, where $\delta$ is the generalized interpolation value, $S_{-x}^{\text{real}}$ is the first value, $S_{+x}^{\text{real}}$ is the second value, $S_{\max}$ is the peak amplitude, and $x$ is the quotient of one over $K$.

A system includes memory hardware configured to store instructions and processor hardware configured to execute the instructions. The instructions include calculating a discrete Fourier transform (DFT) of input radar signals received by a plurality of radar elements. The instructions include identifying a peak amplitude of the DFT. The instructions include designating a frequency corresponding to the peak amplitude of the DFT as an initial frequency estimate. The instructions include selecting a first neighboring point of the DFT based on the initial frequency estimate. The instructions include selecting a second neighboring point of the DFT based on the initial frequency estimate. The instructions include generating a first value based on an amplitude of the first neighboring point of the DFT. The instructions include generating a second value based on an amplitude of the second neighboring point of the DFT. The instructions include calculating a generalized interpolation value based on a generalized discrete DFT interpolation. The generalized discrete DFT interpolation is based on the first value, the second value, and the peak amplitude. The instructions include generating a fine frequency estimate of the input radar signals by summing the initial frequency estimate and the generalized interpolation value.

In other features, the system includes the plurality of radar elements. In other features, a vehicle includes the system. In other features, the first neighboring point corresponds to a lower frequency than the initial frequency estimate. The second neighboring point corresponds to a higher frequency than the initial frequency estimate. In other features, the plurality of radar elements is $N$ radar elements. The DFT has $K$ frequency points. The generalized discrete DFT interpolation is based on $N$ and $K$. In other features, the generalized discrete DFT interpolation is based on a quotient of one over $K$, the peak amplitude, a sum of the first value and the second value, and a difference of the first value and the second value.

Further areas of applicability of the present disclosure will become apparent from the detailed description, the claims, and the drawings. The detailed description and specific examples are intended for purposes of illustration only and are not intended to limit the scope of the disclosure.

BRIEF DESCRIPTION OF THE DRAWINGS

The present disclosure will become more fully understood from the detailed description and the accompanying drawings.

FIG. 1 is a functional block diagram of an example radar system.

FIG. 2A is a functional block diagram of example frequency estimation.

FIG. 2B is a functional block diagram of example angle estimation.

FIGS. 3A-3D are diagrams comparing error of various interpolation methods in an example scenario.

FIG. 4A-4D are diagrams comparing error of various interpolation methods in an example scenario.

FIGS. 5A-5C are diagrams graphically depicting variants of an interpolation scheme.

FIGS. 6A-6D are diagrams comparing error of various interpolation methods in an example scenario.

FIGS. 7A-7D are diagrams comparing error of various interpolation methods in an example scenario.

FIG. 8 is a functional block diagram of an example frequency estimation system.

FIGS. 9A-9D are diagrams comparing error of various interpolation methods in an example scenario.

FIGS. 10A-10D are diagrams comparing error of various interpolation methods in an example scenario.

FIGS. 11A-11B together form a flowchart for a method of frequency estimation and angle estimation.

In the drawings, reference numbers may be reused to identify similar and/or identical elements.

DETAILED DESCRIPTION

**INTRODUCTION**

The present disclosure provides accurate estimates without requiring a specific relationship between the number of sensors and DFT points (as required by the interpolation method in FIIB) or compromising accuracy (as required by parabolic interpolation). The interpolation method in FIIB is not flexible with respect to the number of sensors or the number of DFT points, but is accurate if the number of DFT points meets the interpolation method in FIIB's requirements. For example, when using the interpolation method in FIIB, a 12-point DFT is necessary for six sensors; a 16-point DFT would be inaccurate (that is, have a bias) since the FIIB equations are derived for $K = 2N$ (where $K$ is the number of DFT points and $N$ is the number of data samples, radar array elements, and/or input signals).

The disclosed solution is applicable generally with any reasonable number of DFT points and sensors, and is referred to as General DFT Interpolation (GDI). For example, GDI allows a system to use six sensors with a 16-point DFT or even an 8-point DFT without reducing accuracy. After performing a DFT, additional algorithms are used to fine tune the estimates. An accurate DFT result is desired because it improves the localization performance of the radars. The technical solution is described below in terms of frequency estimation. However, the solution is equally applicable to angle estimation, such as direction-of-arrival (DOA) estimation.

In the case where $K = 2N$ is true, GDI simplifies to the interpolation method in FIIB and therefore produces the same results and accuracy. Table 1 summarizes the requirements and accuracy of the interpolation method in FIIB, parabolic interpolation, and GDI.

Table 1

| Approach | # of Sensors | # of DFT Points | Accuracy Baseline |
|---|---|---|---|
| Interpolation method in FIIB | Not Flexible | Not Flexible | Accurate (Sinusoid) |
| Parabolic Interpolation | Flexible | Flexible | Inaccurate (Parabola) |
| GDI (Present Disclosure) | Flexible | Flexible | Accurate (Sinusoid) |

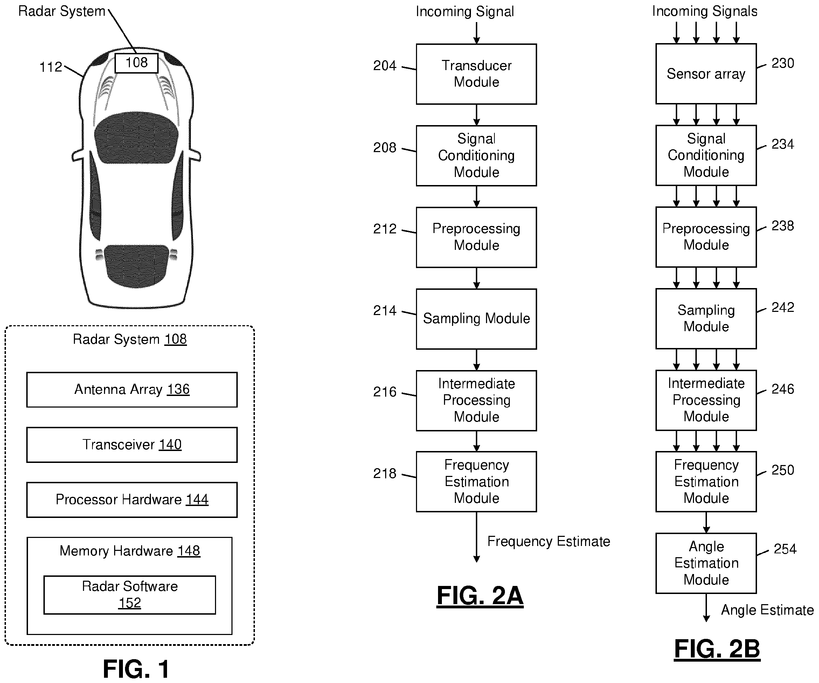

FIG. 1 is a high-level block diagram of radar system 108. Radar system 108 may be mounted to and/or integrated within vehicle 112. Radar system 108 is configured to detect one or more objects that are proximate to vehicle 112. In various implementations, radar system 108 may be a forward-looking radar system.

In various implementations, radar system 108 may be mounted to a top, underside, front side, rear side, left side, or right side of vehicle 112. In various implementations, radar system 108 includes multiple radar subsystems. For example, radar system 108 may include a first front-mounted radar subsystem positioned proximate a left side of vehicle 112 and a second front-mounted radar subsystem positioned proximate a right side of vehicle 112. In various implementations, location(s) of radar system 108 may be selected to provide a particular field of view that encompasses a region of interest in which one or more objects may be present. For example, a field of view may include a 360-degree field of view, one or more 180-degree fields of view, and/or one or more 90-degree fields of view.

In various implementations, vehicle 112 may include one or more systems that use data provided by radar system 108. For example, vehicle 112 may include a driver assistance system and/or an autonomous driving system. The driver assistance system may use data provided by radar system 108 to monitor one or more blind spots of vehicle 112 and/or alert a driver of vehicle 112 of a potential collision with an object. The autonomous driving system may use the data provided by radar system 108 to drive vehicle 112, avoid collisions with objects, perform emergency braking, change lanes, and/or adjust a speed of vehicle 112, among others.

In various implementations, radar system 108 may include at least one antenna array 136 and at least one transceiver 140. In various implementations, radar system 108 may include processor hardware 144 and memory hardware 148. The memory hardware 148 may include radar software 152. In various implementations, radar software 152 may be configured to analyze radar signals, detect one or more objects, and/or determine one or more characteristics (such as position and/or velocity) of the objects. In various implementations, radar software is fully or partially implemented in hardware.

FIG. 2A is a block diagram depicting frequency estimation. In various implementations, an incoming signal is received at transducer module 204. Signal conditioning module 208 conditions the signal, such as by performing amplification, noise reduction, etc. Preprocessing module 212 performs actions such as analog filtering, down-conversion, etc. Sampling module 214 converts the signal from analog to digital. Intermediate processing module 216 performs actions, such as digital filtering. Frequency estimation module 218 generates a frequency estimate, as described in more detail below.

FIG. 2B is a block diagram depicting direction-of-arrival (DOA) angle estimation, and includes elements similar to those depicted in FIG. 2A. In various implementations, incoming signals are received at sensor array 230. Signal conditioning module 234 may be implemented similarly to signal conditioning module 208. Preprocessing module 238 may be implemented similarly to preprocessing module 212. Sampling module 242 may be implemented similarly to sampling module 214. Intermediate processing module 246 may be implemented similarly to intermediate processing module 216.

In various implementations, intermediate processing module 246 may additionally or alternatively perform range-Doppler processing (for example, estimating the ranging frequency based on data in the fast-time domain and the Doppler frequency based on data in the slow-time domain), peak selection, or priority assortment, etc. Frequency estimation module 250 may be implemented similarly to frequency estimation module 218. Angle estimation module 254 generates one or more angle estimates based on the frequency estimate(s) and data collected by radar array elements spread in the spatial domain.

DELTA EQUATION

The technical solution is described below in terms of frequency estimation. However, the solution is equally applicable to direction-of-arrival (DOA) estimation. In various implementations, the generalized DFT interpolation (GDI) uses Equation (1). In this equation, the signal is composed of a complex sum of complex exponentials. In this form, the equation can be vectorized.

$$\delta = \frac{1}{\pi} \tan^{-1} \left( \frac{\left(S_{-x}^{\text{real}} - S_{+x}^{\text{real}}\right) \sin \pi x}{2 S_{\text{max}} \cos \pi N x - \left(S_{-x}^{\text{real}} + S_{+x}^{\text{real}}\right) \cos \pi x} \right) \tag{1}$$

For simplicity, the following derivation is for a single signal. In some implementations, to achieve greater accuracy, the method can be applied iteratively. For example, if there are two signals, there will be a residue and the result may be less accurate; therefore, the method can be repeated until the desired accuracy is achieved.

Consider the discrete-time uniformly sampled received signal $s(n)$ of length $N$ having the following form, where $f$ is the digital signal frequency such that $f \in [0 \ 1)$ Hz/Hz, and $\phi$ is the initial phase:

$$s(n) = A e^{j(2\pi f n + \phi)}, n = 0, \cdots, N - 1 \tag{2}$$

In various implementations, a rectangular window is applied. In other implementations, a window is not applied to the signal because the signal is already the correct sinusoid. The rectangular window given as follows, where N is time index:

$$w(n) \triangleq \begin{cases} 1, & n = 0, \cdots, N - 1 \\ 0, & \text{otherwise.} \end{cases} \tag{3}$$

In some implementations, it is convenient to define windows so that the direct current (DC) gain is 1, in which case the definition above Equation (3) is multiplied by $1/N$.

The discrete-time Fourier transform of the signal $s(n)$ is given as follows, where $K$ is the frequency index:

$$S(k) \triangleq \sum_{n=-\infty}^{\infty} w(n) s(n) e^{-j2\pi \frac{k}{K} n}, k = 0, \cdots, K - 1, \tag{4}$$

$$S(k) = \sum_{n=0}^{N-1} A e^{j(2\pi f n + \phi)} \cdot e^{-j2\pi \frac{k}{K} n} = A e^{j\phi} \cdot \sum_{n=0}^{N-1} e^{j2\pi \left(f - \frac{k}{K}\right) n}$$

Using the geometric series formula, Equation (4) becomes Equation (5) below:

$$S(k) = A e^{j\phi} \cdot \frac{1 - e^{j2\pi \left(f - \frac{k}{K}\right) N}}{1 - e^{j2\pi \left(f - \frac{k}{K}\right)}}. \tag{5}$$

Subsequent modification results in the following formulation:

$$S(k) = A e^{j\phi} \cdot \frac{e^{j\pi \left(f - \frac{k}{K}\right) N}}{e^{j\pi \left(f - \frac{k}{K}\right)}} \cdot \frac{e^{-j\pi \left(f - \frac{k}{K}\right) N} - e^{j\pi \left(f - \frac{k}{K}\right) N}}{e^{-j\pi \left(f - \frac{k}{K}\right)} - e^{j\pi \left(f - \frac{k}{K}\right)}}$$

$$\tag{6}$$

$$S(k) = A e^{j\phi} \cdot e^{j\pi \left(f - \frac{k}{K}\right)(N-1)} \cdot \frac{\sin \pi \left(f - \frac{k}{K}\right) N}{\sin \pi \left(f - \frac{k}{K}\right)}$$

The absolute value of $S(k)$ is given as follows:

$$|S(k)| = \left| A \frac{\sin \pi \left( f - \frac{k}{K} \right) N}{\sin \pi \left( f - \frac{k}{K} \right)} \right| = \left| AN \times \mathrm{asinc}_N \left( f - \frac{k}{K} \right) \right| \tag{7}$$

The above result is also called an *aliased sinc* function.

The maximum value of $|S(k)|$, $k = 0, \cdots, K\text{-}1$ will be at $\hat{k} = \min_k \left( f - \frac{k}{K} \right)$ given as follows, where $\delta = f - \frac{\hat{k}}{K} : K$

$$S_{\max} = \left| S(\hat{k}) \right| = \left| A \frac{\sin \pi \left( f - \frac{\hat{k}}{K} \right) N}{\sin \pi \left( f - \frac{\hat{k}}{K} \right)} \right| = \left| A \frac{\sin \pi \delta N}{\sin \pi \delta} \right| \tag{8}$$

In the subsequent discussion, the absolute value operator $|\cdot|$ is dropped under the assumption that the sampling frequency is enough so that the maximum value and the neighboring points have the same polarity, which is generally the case when $K \geq 2N$. The maximum FT amplitude on grid, $S_{\max}$, corresponds to the coarse frequency estimate given by:

$$f_{\mathrm{coarse}} = \frac{\hat{k}}{K} \tag{9}$$

In case $f = \frac{\hat{k}}{K}$ (that is, $\delta = 0$), the maximum amplitude of FT spectrum lies on the $\hat{k}$th grid point resulting in the estimated frequency to be $f_{\mathrm{est}} = f_{\mathrm{coarse}} = \frac{\hat{k}}{K}$.

However, this might not be the case in general as the maximum value of the FT spectrum might lie off the FT grid. Due to the symmetry of $|S(k)|$ around the maximum value, $\delta$ is between a given range as shown in Equation (10):

$$-\frac{1}{2K} \leq \delta \leq \frac{1}{2K} \tag{10}$$

Using Equation (7), the two neighboring coefficients of the peak FT spectrum can be found as follows:

$$S_{\pm x} = S(\hat{k} \pm 1) = A \frac{\sin \pi \left( f - \frac{\hat{k}}{K} \mp \frac{1}{K} \right) N}{\sin \pi \left( f - \frac{\hat{k}}{K} \mp \frac{1}{K} \right)}$$

$$S_{\pm x} = A \frac{\sin \pi \left( f - \frac{\hat{k}}{K} \mp x \right) N}{\sin \pi \left( f - \frac{\hat{k}}{K} \mp x \right)} = A \frac{\sin \pi (\delta \mp x) N}{\sin \pi (\delta \mp x)} \tag{11}$$

Further solving Equation (11) above gives Equation (12) below:

$$S_{\pm x} = A \frac{\sin \pi N \delta \cos \pi N x \mp \cos \pi N \delta \sin \pi N x}{\sin \pi \delta \cos \pi x \mp \cos \pi \delta \sin \pi x}. \tag{12}$$

Dividing the numerator and denominator of Equation (12) by $\sin \pi \delta$ results in Equation (13a), which can be further simplified to Equation (13c).

$$S_{\pm x} = A \frac{\frac{\sin \pi N\delta}{\sin \pi\delta} \cos \pi Nx \mp \frac{\sin \pi N\delta}{\sin \pi\delta} \frac{\cos \pi N\delta}{\sin \pi N\delta} \sin \pi Nx}{\frac{\sin \pi\delta}{\sin \pi\delta} \cos \pi x \mp \frac{\cos \pi\delta}{\sin \pi\delta} \sin \pi x} \qquad (13a)$$

$$S_{\pm x} = A \frac{\frac{S_{\max}}{A} \cos \pi Nx \mp \frac{S_{\max}}{A} \cot \pi N\delta \sin \pi Nx}{\cos \pi x \mp \cot \pi\delta \sin \pi x} \qquad (13b)$$

$$S_{\pm x} = \frac{S_{\max} \cos \pi Nx \mp S_{\max} \cot \pi N\delta \sin \pi Nx}{\cos \pi x \mp \cot \pi\delta \sin \pi x} \qquad (13c)$$

Simplifying Equation (13c) results in:

$$S_{\pm x}(\cos \pi x \mp \cot \pi\delta \sin \pi x) = S_{\max} \cos \pi Nx \mp S_{\max} \cot \pi N\delta \sin \pi Nx, \qquad (14a)$$

$$S_{\pm x} \cos \pi x \mp S_{\pm x} \cot \pi\delta \sin \pi x = S_{\max} \cos \pi Nx \mp S_{\max} \cot \pi N\delta \sin \pi Nx. \qquad (14b)$$

Which can be decomposed as follows:

$$S_{+x} \cos \pi x - S_{+x} \cot \pi\delta \sin \pi x = S_{\max} \cos \pi Nx - S_{\max} \cot \pi N\delta \sin \pi Nx,$$
$$S_{-x} \cos \pi x + S_{-x} \cot \pi\delta \sin \pi x = S_{\max} \cos \pi Nx + S_{\max} \cot \pi N\delta \sin \pi Nx \qquad (14c)$$

Adding both equations represented in Equation (14) results in:

$$(S_{-x} + S_{+x}) \cos \pi x + (S_{-x} - S_{+x}) \cot \pi\delta \sin \pi x = 2S_{\max} \cos \pi Nx \qquad (15)$$

The fractional bin estimate $\delta$ can therefore be calculated as follows:

$$\delta = \frac{1}{\pi} \cot^{-1} \left( \frac{2S_{\max} \cos \pi Nx - (S_{-x} + S_{+x}) \cos \pi x}{(S_{-x} - S_{+x}) \sin \pi x} \right) \qquad (16a)$$

When $S_{\max}$ is the actual (on and off-grid) maximum value of the whole DFT spectrum, $S_{+x} = S_{-x}$ due to the symmetry of the DFT spectrum around the maximum value. For this case, the above equation will result in $\delta = 0$. All the terms on the right-hand side of the above equations are known. The amplitudes $S_{\max}$, $S_{+x}$, and $S_{-x}$ are known from the DFT spectrum. On the other hand, $\cos \pi Nx$, $\cos \pi x$, and $\sin \pi x$ are also known as $x = \frac{1}{K}$ and $N$ is the total number of samples of the input data.

Computational instabilities might arise in the computation of fractional bin $\delta$ when $S_{-x} \approx S_{+x}$. This can be mitigated by employing the following equivalent formulation for the above equation as follows:

$$\delta = \frac{1}{\pi} \tan^{-1} \left( \frac{(S_{-x} - S_{+x}) \sin \pi x}{2S_{\max} \cos \pi Nx - (S_{-x} + S_{+x}) \cos \pi x} \right) \qquad (16b)$$

The finalized frequency estimate is given as follows:

$$f_{\text{est}} = f_{\text{coarse}} + \delta = \frac{\hat{k}}{K} + \delta \qquad (17)$$

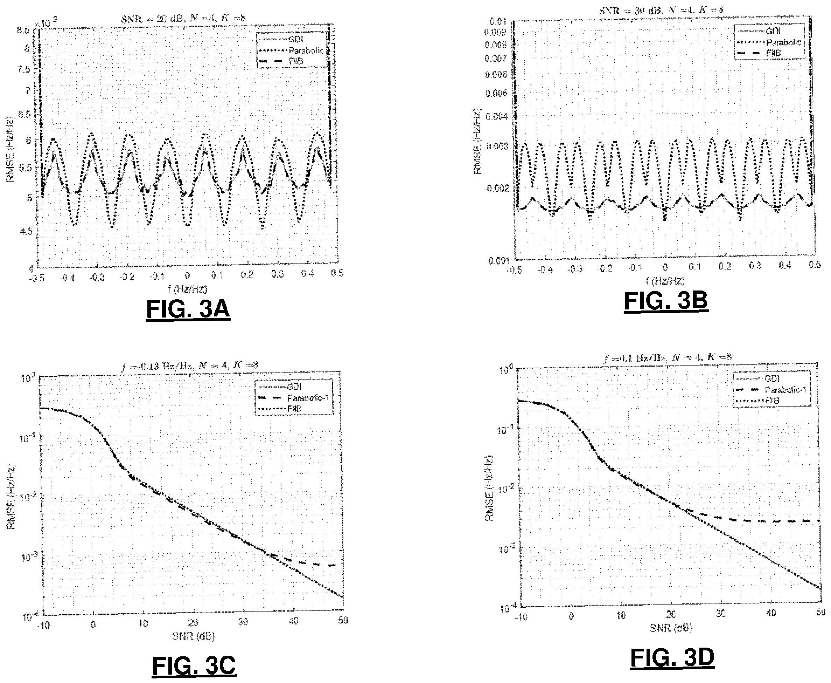

FIGS. 3A-3D show an estimation error comparison for an example implementation of the present disclosure (referred to as GDI) along with parabolic interpolation and the interpolation method in FIIB. The error is measured as root mean squared error (RMSE) and plotted against frequency in FIGS. 3A-3B and against signal-to-noise ratio (SNR) in FIGS. 3C-3D. First, it can be observed from FIGS. 3A-3D that the interpolation method in FIIB and GDI have the same performance in this scenario. This is advantageous because the default configuration of GDI is a generalized interpolation method that can work for any $K > 2N$; however, the interpolation method in FIIB only optimally works for $K = 2N$ or for $K = N$ requiring further refinement. Thus, GDI is a general interpolation scheme, whereas the interpolation method in FIIB is restricted to a special case.

Moreover, FIG. 3A shows that the worst-case error for GDI and parabolic interpolation is the same at SNR = 20 dB as the frequency is varied from -0.5 Hz/Hz to 0.5 Hz/Hz. It can be noted in FIG. 3B that GDI performance significantly improves relative to parabolic at higher SNR. FIG. 3C and FIG. 3D show the worst and best frequency cases for GDI. It can be observed that the parabolic interpolation has either minor performance gain or no performance gain at lower SNR compared to GDI; however, at mild and higher SNR, GDI outperforms parabolic interpolation.

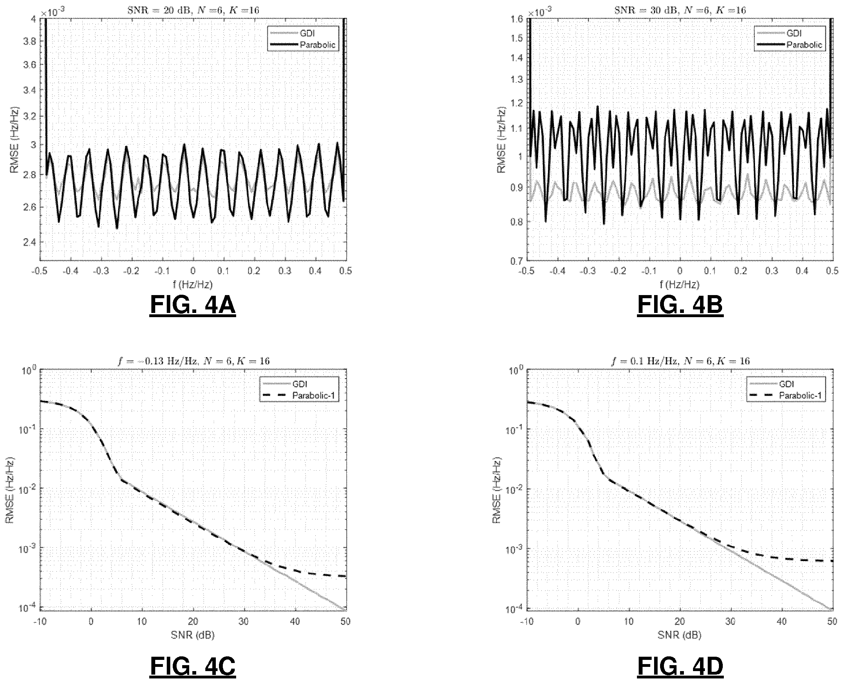

FIGS. 4A-4D investigate the performance of parabolic interpolation and an example GDI implementation for $N = 6$ and $K = 16$. The results from FIGS. 4A-4D are similar to those depicted in FIGS. 3A-3D in that GDI has enhanced performance over parabolic interpolation. In FIGS. 4A-4D, the interpolation method in FIIB is not applicable because the interpolation method in FIIB only optimally works for $K = 2N$ (or for $K = N$ requiring further refinement).

## $K = N$ *CASE*

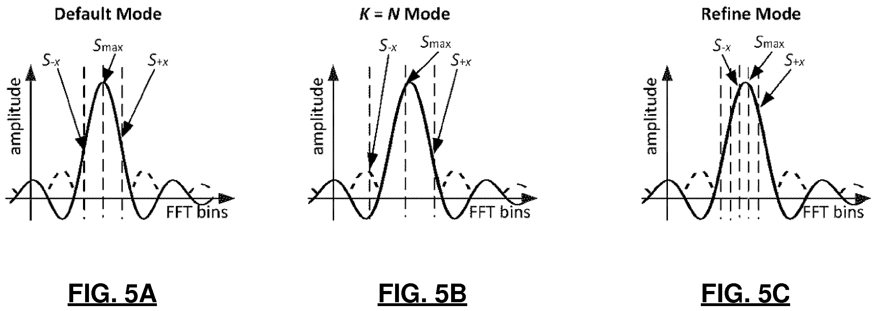

In some implementations, a variant of GDI can be applied to specific scenarios. FIGS. 5A-5C illustrate the basic concept of these variants compared to the default mode of GDI. In FIG. 5A, the default scheme (as described with respect to Equation (1)) is shown. In default mode (which may be used when $K \geq 2N$), a peak DFT point is selected along with a left and right neighboring point.

In FIG. 5B, a GDI variant (for $K = N$) is depicted. $K = N$ is a special case where one of the neighboring DFT points of the DFT peak lies outside the main lobe. When this neighboring point is sampled, the absolute value operator using $|S_{\pm x}|$ reverses the polarity of the negative neighboring point to positive. Equation (11) shows that the polarity of sampled points is important for the GDI formula. Polarity can be ignored when the polarity of the peak and its neighboring points is the same for $K \geq 2N$. However, for $K = N$, one of the neighboring points will have a negative polarity.

The polarity of neighboring points can be readily restored. Simulation analysis of several scenarios indicates that the neighboring point with smallest amplitude has the negative polarity. Once the polarity of smallest amplitude neighboring point is restored to negative, the GDI formula becomes valid.

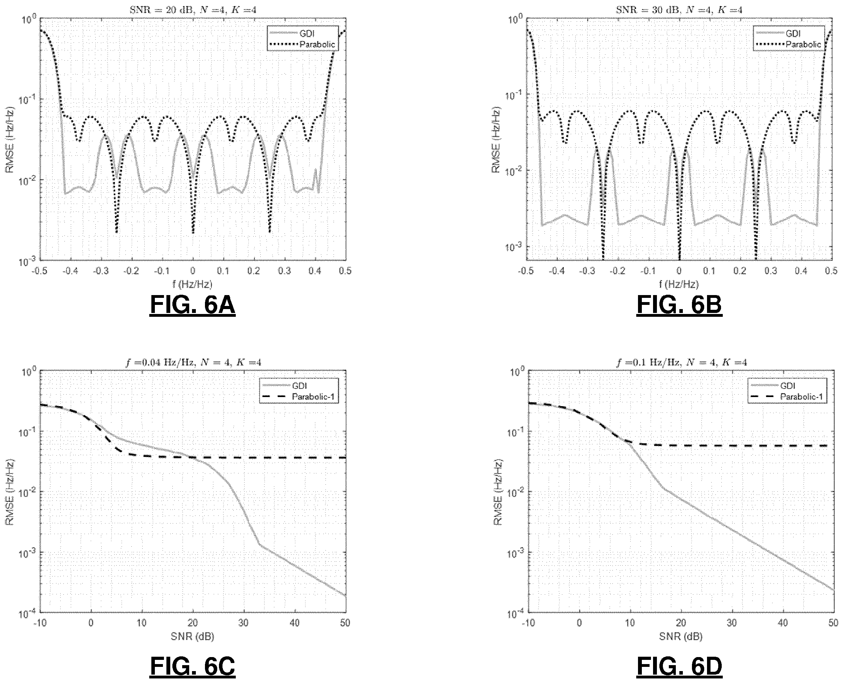

FIGS. 6A-6D investigate the performance of parabolic interpolation and the proposed GDI scheme for $N = 4$ and $K = 4$ (that is, $K = N$ mode). Note that the interpolation method in FIIB is not applicable for this case because the FIIB interpolation method only optimally works for $K = 2N$. It can be observed that the GDI scheme outperforms the parabolic interpolation in most cases. For FIGS. 6A and 6B, the worst-case error for GDI is lower for SNR = 20 dB as well as SNR = 30 dB. FIG. 6C shows the worst-case frequency estimation case for GDI where GDI outperforms parabolic interpolation above 20 dB. On the other hand, FIG. 6D shows the best case for GDI where GDI matches or outperforms parabolic interpolation regardless of SNR.

## REFINE MODE

In FIG. 5C, refine mode is illustrated, which can improve accuracy in some implementations, such as when $N < K < 2N$. In various implementations, refine mode may also be used when $K = N$ or even over the entire interval $K \geq N$. In some implementations, instead of refine mode, a phase shift is used, as described below.

In various implementations, refine mode includes calculating two additional sub-grid DFT points half-way from the peak DFT location. For example, if the DFT peak appears at the grid point $\hat{k}$, two additional DFT grid point calculations are done at $\hat{k} \pm 0.5$. Subsequently, five neighboring points given by $\hat{k}, \hat{k} \pm 0.5$, and $\hat{k} \pm 1$ are selected. Another max() operation is performed on the five selected grid points to select the new maximum. Subsequently, $S_{\max}$ and $S_{\pm x}$ are identified using the five neighboring points and the GDI formula is used with the following modification (which also works for $K \geq N$):

$$\delta = \frac{1}{\pi} \cot^{-1} \left( \frac{2S_{\max} \cos 0.5\pi Nx - (S_{-x} + S_{+x}) \cos 0.5\pi x}{(S_{-x} - S_{+x}) \sin 0.5\pi x} \right) \tag{18a}$$

$$\delta = \frac{1}{\pi}\tan^{-1}\left(\frac{(S_{-x} - S_{+x})\sin 0.5\pi x}{2 S_{\max}\cos 0.5\pi N x - (S_{-x} + S_{+x})\cos 0.5\pi x}\right) \qquad (18b)$$

Note that the 0.5 multiplier is used because the neighboring points on either side of the peak are half-steps away rather than full steps.

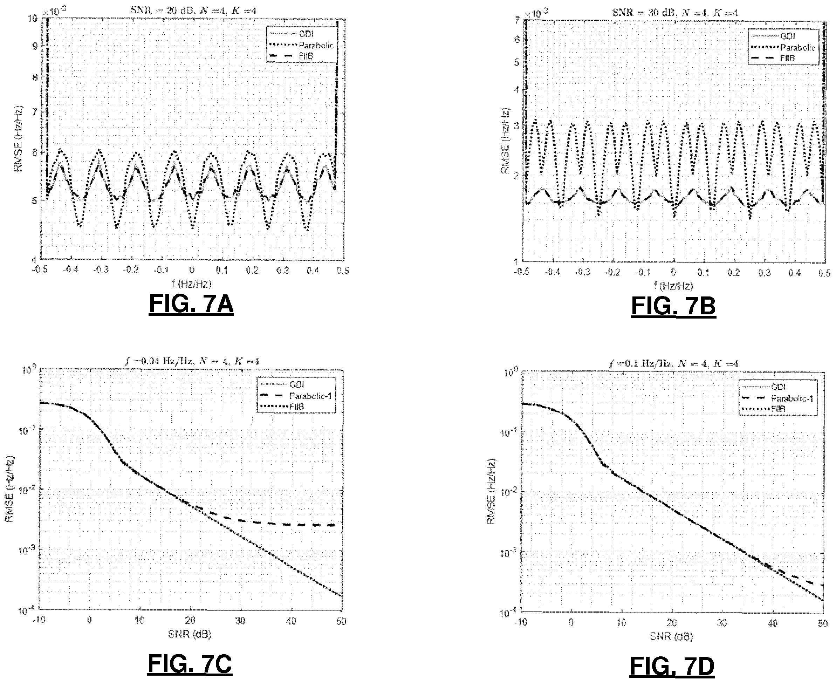

FIGS. 7A-7D illustrate the performance of parabolic interpolation and an example implementation of GDI for $N = 4$ and $K = 4$ in refine mode. Note that the interpolation method in FIIB is applicable for this case and requires further refinement just as GDI. The advantage of refinement is also applied to parabolic interpolation to match the computational complexity of all algorithms. It can be observed that GDI and the interpolation method in FIIB have lower worst-case error for medium SNR, while GDI and the interpolation method in FIIB outperform parabolic interpolation at high SNR.

## COMPLEX GENERALIZED DFT INTERPOLATION

In some implementations, complex GDI is used instead of the methods previously described, and can be applied in all previously discussed scenarios, such as $K \geq N$ and $K \geq 2N$. When necessary, complex GDI includes a phase shift (such as when $K < 2N$). Complex GDI provides higher accuracy in a variety of cases, but generally requires more computation burden. For example, when $K = N$, absolute-value-based GDI may result in low accuracy; complex GDI works better in the $K = N$ case because complex GDI does not estimate the polarity of $S_{\pm x}^{\text{real}}$. In implementations where $K = N$, $S_{\pm x}^{\text{real}}$ is close to zero, which causes instability of the polarity of $S_{\pm x}^{\text{real}}$. As another example, when $N < K < 2N$, absolute-value-based GDI may be invalid because the polarity of $S_{\pm x}^{\text{real}}$ is unpredictable for different frequencies.

Complex GDI can be described by the following derivations. Equation (6) describes the maximum value of the FT at $\hat{k}$th bin as shown in Equation (19), where $\phi_{\max} = \phi + \left(f - \frac{\hat{k}}{K}\right)(N - 1)$ denotes the phase of $S_{\max}$ given by $\tan^{-1}\frac{\text{imag}\{S_{\max}\}}{\text{real}\{S_{\max}\}}$:

$$\begin{aligned} S_{\max} &= A e^{j\phi} \cdot e^{j\pi\left(f - \frac{\hat{k}}{K}\right)(N-1)} \cdot \frac{\sin\pi\left(f - \frac{\hat{k}}{K}\right)N}{\sin\pi\left(f - \frac{\hat{k}}{K}\right)} \\ &= A e^{j\phi_{\max}} \cdot \frac{\sin\pi\left(f - \frac{\hat{k}}{K}\right)N}{\sin\pi\left(f - \frac{\hat{k}}{K}\right)}, \end{aligned} \qquad (19)$$

The neighboring values $S_{\pm x}$ can take the following form:

$$\begin{aligned} S_{\pm x} &= S(\hat{k} \pm 1) = A e^{j\phi} \cdot e^{j\pi\left(f - \frac{\hat{k}}{K} \mp x\right)(N-1)} \cdot \frac{\sin\pi\left(f - \frac{\hat{k}}{K} \mp x\right)N}{\sin\pi\left(f - \frac{\hat{k}}{K} \mp x\right)}. \\ S_{\pm x} &= S(\hat{k} \pm 1) = A \cdot e^{j\phi_{\max}} \cdot e^{\mp j\pi(N-1)x} \cdot \frac{\sin\pi\left(f - \frac{\hat{k}}{K} \mp x\right)N}{\sin\pi\left(f - \frac{\hat{k}}{K} \mp x\right)}. \end{aligned} \qquad (20)$$

Since, $e^{j\phi_{\max}}$ and $e^{\mp j\pi(N-1)x}$ are known, these terms are removed, leading to the following equations:

$$S_{\max}^{\text{real}} = A. \frac{\sin \pi \left( f - \frac{\hat{k}}{K} \right) N}{\sin \pi \left( f - \frac{\hat{k}}{K} \right)},$$

$$(21)$$

$$S_{\pm x}^{\text{real}} = A. \frac{\sin \pi \left( f - \frac{\hat{k}}{K} \mp x \right) N}{\sin \pi \left( f - \frac{\hat{k}}{K} \mp x \right)}.$$

Subsequently, the procedure adopted earlier for finding $\delta$ leads to the following equation:

$$\delta = \frac{1}{\pi} \tan^{-1} \left( \frac{\left( S_{-x}^{\text{real}} - S_{+x}^{\text{real}} \right) \sin \pi x}{2 S_{\max} \cos \pi N x - \left( S_{-x}^{\text{real}} + S_{+x}^{\text{real}} \right) \cos \pi x} \right).$$

$$(22)$$

Compared to the absolute value formulation of GDI above, the complex formulation requires the estimation of dominant phase $\phi_{\max}$ and subsequent phase elimination from $S_{\max}$ and $S_{\pm x}$. Once the $S_{\max}$ and $S_{\pm x}$ are estimated, $e^{\phi_{\max}}$ and $e^{\mp j\pi(N-1)x}$ are found and used to calculate $S_{\max}^{\text{real}}$ and $S_{\pm x}^{\text{real}}$. Furthermore, the real $\{\cdot\}$ operator is used to force $S_{\max}^{\text{real}}$ and $S_{\pm x}^{\text{real}}$ as real elements as in some systems $S_{\max}^{\text{real}}$ and $S_{\pm x}^{\text{real}}$ contain complex parts due to the presence of complex noise.

Complex forms of GDI can also be used in other modes. For $K = N$, complex GDI does not need to estimate the sign of $S_{\pm x}$ because the sign is already retrieved in Equation (21) by compensating the phase part in Equation (20). Similarly, complex GDI can also work for refine mode and $\delta$ can be found similarly to Equation (18) as follows:

$$\delta = \frac{1}{\pi} \tan^{-1} \left( \frac{\left( S_{-x}^{\text{real}} - S_{+x}^{\text{real}} \right) \sin 0.5\pi x}{2 S_{\max} \cos 0.5\pi N x - \left( S_{-x}^{\text{real}} + S_{+x}^{\text{real}} \right) \cos 0.5\pi x} \right).$$

$$(23)$$

BLOCK DIAGRAM

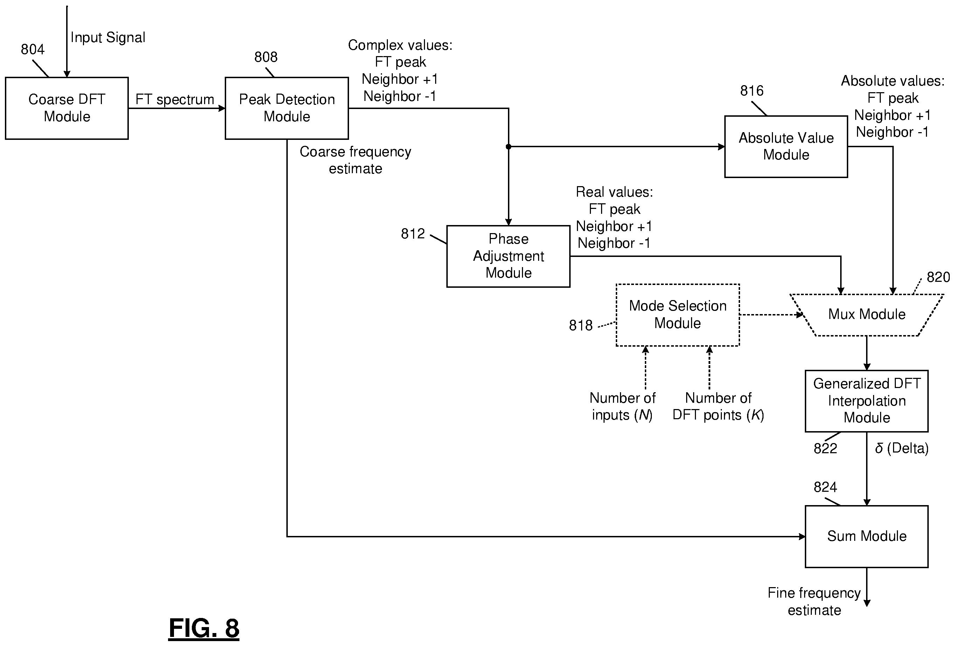

FIG. 8 is a functional block diagram of frequency estimation according to example implementations of GDI. The modules in FIG. 8 may implement the frequency estimation module 218 of FIG. 2A and/or the frequency estimation module 250 of FIG. 2B. Coarse DFT module 804, a coarse grid Fourier transform (FT) - such as a discrete Fourier transform (DFT) - is calculated for a set of input signals (such as time-series radar data).

Peak detection module 808 identifies a peak amplitude of the FT spectrum; the frequency at which the peak amplitude occurs is designated as the coarse frequency estimate. Peak detection module 808 then identifies the two neighboring points - one on either side - of the coarse frequency estimate.

In implementations where phase adjustment is performed, that phase adjustment is performed by phase adjustment module 812. For example, phase adjustment may be performed in scenarios where $K = N$ or $N < K < 2N$. Absolute value module 816 determines absolute values of one or more of the peak amplitude, the first neighboring point amplitude, and the second neighboring point amplitude. In various implementations, mode selection module 818 determines which GDI variant to use (such as complex, refine, or $K = N$) based on $K$ and $N$. Mode selection module 818 controls multiplexer module 820 to select whether the output of phase adjustment module 812 or the output of absolute value module 816 is used. The visual representation as a multiplexer is simply for illustration - in practice, mode selection module 818 may activate either phase adjustment module 812 or absolute value module and deactivate the other depending on the mode.

In fact, in some implementations, a specific mode of GDI may be hardcoded, such as if the values of $K$ and $N$ are fixed for a particular system or if they only vary within a certain range that does not affect the desired mode of operation. In such implementations, mode selection module 818 and multiplexer module 820 may be omitted, as may one or both of phase adjustment module 812 and absolute value module 816.

Generalized DFT interpolation module 822 receives values of the peak and neighboring points, which may have been adjusted by phase adjustment module 812 or absolute value module 816. Generalized DFT interpolation module 822 calculates $\delta$ (delta), such as according to one of the above equations. Sum module 824 adds delta and the coarse frequency estimate (from peak detection module 808) to generate an accurate estimate of the frequency (the fine frequency estimate) of the input signal.

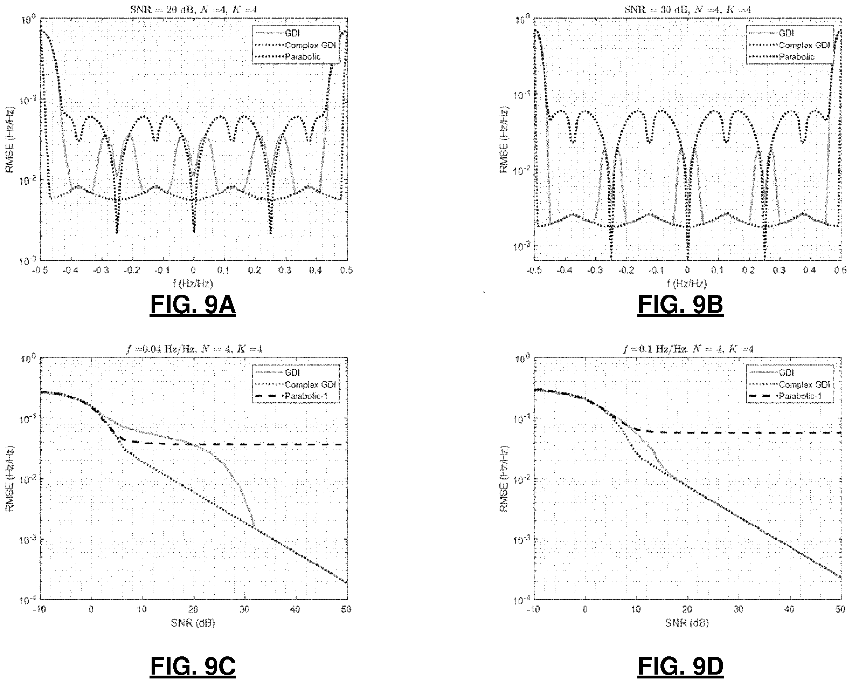

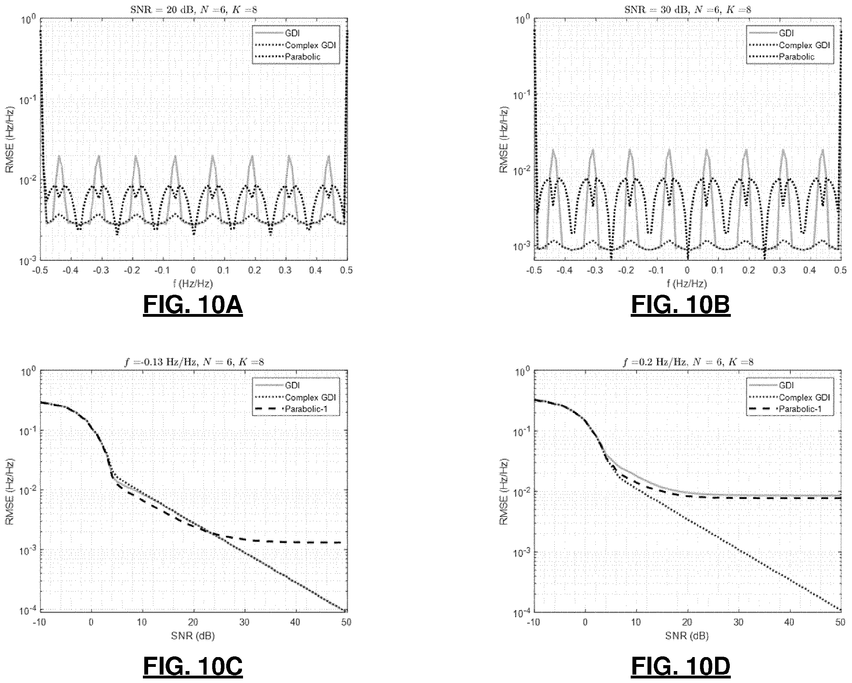

FIGS. 9A-9D and 10A-10D illustrate the performance superiority of complex GDI. FIGS. 9A-9D show the results for the $K = N$ case and FIGS. 10A-10D show the accuracy of various interpolations for the $N < K < 2N$ case.

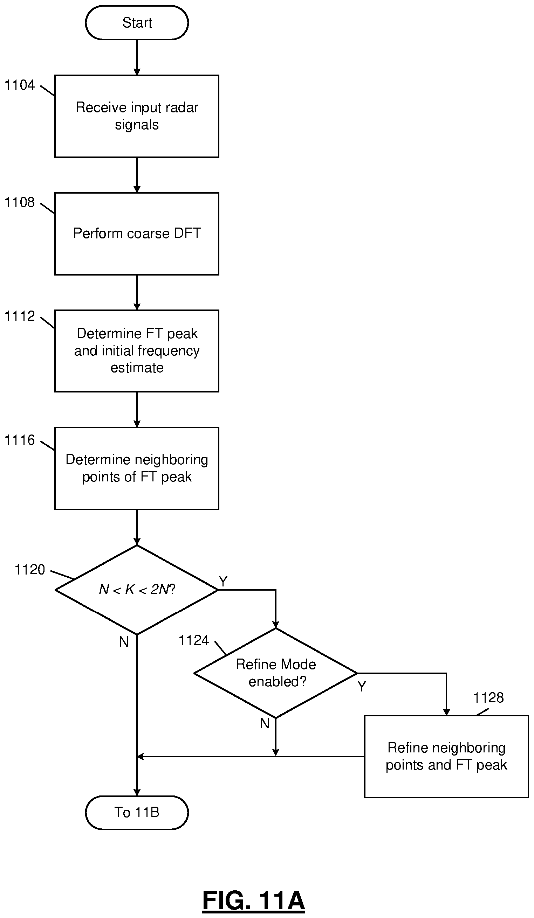

FIGS. 11A-11B together form a flowchart of an example method of performing a frequency estimation or angle estimation of a radar signal. At 1104, control receives input radar signals. At 1108, a coarse DFT is performed. At 1112, the peak of the DFT is determined and the frequency at which the peak of the DFT occurs is designated as an initial frequency estimate. At 1116, the two points that neighbor the DFT peak are found.

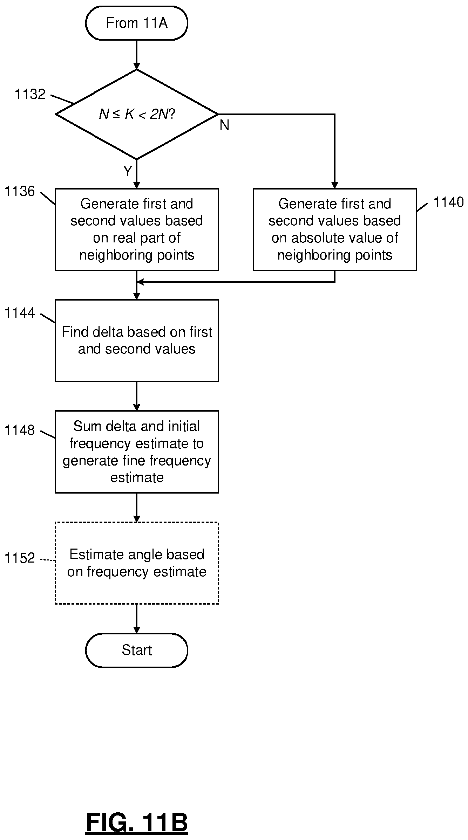

At 1120, control determines whether $N < K < 2N$ is true (where $K$ is the number of DFT points and $N$ is the number of inputs, channels, radar elements, etc.). If $N < K < 2N$ is true, control moves to 1124; otherwise, control moves to 1132 in FIG. 11B. At 1124, control determines whether refine mode is enabled. If refine mode is enabled, control moves to 1128 and the neighboring points and peak of the DFT are refined. Control continues to 1132 in FIG. 11B. Referring back to 1124, if refine mode is not enabled, control moves to 1132. Whether to enable refine mode may be a design decision based on considerations of accuracy, computational availability, and speed.

At 1132, control determines whether $N \leq K < 2N$ is true. If so, control moves to 1136 and generates first and second values by performing a phase shift by determining the real part of the neighboring points. Control then continues to 1144. Referring back to 1132, if $N \leq K < 2N$ is false, control moves to 1140 and generates the first and second values based on the absolute value of the neighboring points of the DFT, and then continues to 1144. At 1144, control calculates delta based on the first and second values and the DFT peak, as described in more detail above. The delta calculation may be dependent on whether refine mode is enabled. At 1148, control sums delta and the initial frequency estimate to generate a fine frequency estimate. In various implementations, at 1152, control uses the frequency estimate to generate an angle estimate.

## CONCLUSION

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

Spatial and functional relationships between elements (for example, between modules) are described using various terms, including "connected," "engaged," "interfaced," and "coupled." Unless explicitly described as being "direct," when a relationship between first and second elements is described in the above disclosure, that relationship encompasses a direct relationship where no other intervening elements are present between the first and second elements as well as an indirect relationship where one or more intervening elements are present (either spatially or functionally) between the first and second elements.

As noted below, the term "set" generally means a grouping of one or more elements. However, in various implementations a "set" may, in certain circumstances, be the empty set (in other words, the set has zero elements in those circumstances). As an example, a set of search results resulting from a query may, depending on the query, be the empty set. In contexts where it is not otherwise clear, the term "non-empty set" can be used to explicitly denote exclusion of the empty set - that is, a non-empty set will always have one or more elements.

A "subset" of a first set generally includes some of the elements of the first set. However, in various implementations, a subset of the first set may not be a proper subset: in certain circumstances, the subset may be coextensive with (equal to) the first set. In contexts where it is not otherwise clear, the term "proper subset" can be used to explicitly denote that a subset of the first set must exclude at least one of the elements of the first set. Further, in various implementations, the term "subset" does not necessarily exclude the empty set. As an example, consider a set of candidates that was selected based on first criteria and a subset of the set of candidates that was selected based on second criteria; if no elements of the set of candidates met the second criteria, the subset may be the empty set. In contexts where it is not otherwise clear, the term "non-empty subset" can be used to explicitly denote exclusion of the empty set.

In the figures, the direction of an arrow, as indicated by the arrowhead, generally demonstrates the flow of information (such as data or instructions) that is of interest to the illustration. For example, when element A and element B exchange a variety of information but information transmitted from element A to element B is relevant to the illustration, the arrow may point from element A to element B. This unidirectional arrow does not imply that no other information is transmitted from element B to element A. Further, for information sent from element A to element B, element B may send requests for, or receipt acknowledgements of, the information to element A.

In this application, including the definitions below, the term "module" can be replaced with the term "controller" or the term "circuit." In this application, the term "controller" can be replaced with the term "module."

The term "module" may refer to, be part of, or include processor hardware (shared, dedicated, or group) that executes code coupled with memory hardware (shared, dedicated, or group) that stores code executed by the processor hardware.

The module may include one or more interface circuit(s). In some examples, the interface circuit(s) may implement wired or wireless interfaces that connect to a local area network (LAN) or a wireless personal area network (WPAN). Examples of a LAN are Institute of Electrical and Electronics Engineers (IEEE) Standard 802.11-2020 (also known as the WIFI wireless networking standard) and IEEE Standard 802.3-2018 (also known as the ETHERNET wired networking standard). Examples of a WPAN are IEEE Standard 802.15.4 (including the ZIGBEE standard from the ZigBee Alliance) and, from the Bluetooth Special Interest Group (SIG), the BLUETOOTH wireless networking standard (including Core Specification versions 3.0, 4.0, 4.1, 4.2, 5.0, and 5.1 from the Bluetooth SIG).

The module may communicate with other modules using the interface circuit(s). Although the module may be depicted in the present disclosure as logically communicating directly with other modules, in various implementations the module may actually communicate via a communications system. The communications system includes physical and/or virtual networking equipment such as hubs, switches, routers, and gateways. In some implementations, the communications system connects to or traverses a wide area network (WAN) such as the Internet. For example, the communications system may include multiple LANs connected to each other over the Internet or point-to-point leased lines using technologies including Multiprotocol Label Switching (MPLS) and virtual private networks (VPNs).

In various implementations, the functionality of the module may be distributed among multiple modules that are connected via the communications system. For example, multiple modules may implement the same functionality distributed by a load balancing system. In a further example, the functionality of the module may be split between a server (also known as remote, or cloud) module and a client (or, user) module. For example, the client module may include a native or web application executing on a client device and in network communication with the server module.

The term code, as used above, may include software, firmware, and/or microcode, and may refer to programs, routines, functions, classes, data structures, and/or objects. Shared processor hardware encompasses a single microprocessor that executes some or all code from multiple modules. Group processor hardware encompasses a microprocessor that, in combination with additional microprocessors, executes some or all code from one or more modules. References to multiple microprocessors encompass multiple microprocessors on discrete dies, multiple microprocessors on a single die, multiple cores of a single microprocessor, multiple threads of a single microprocessor, or a combination of the above.

The memory hardware may also store data together with or separate from the code. Shared memory hardware encompasses a single memory device that stores some or all code from multiple modules. One example of shared memory hardware may be level 1 cache on or near a microprocessor die, which may store code from multiple modules. Another example of shared memory hardware may be persistent storage, such as a solid state drive (SSD) or magnetic hard disk drive (HDD), which may store code from multiple modules. Group memory hardware encompasses a memory device that, in combination with other memory devices, stores some or all code from one or more modules. One example of group memory hardware is a storage area network (SAN), which may store code of a particular module across multiple physical devices. Another example of group memory hardware is random access memory of each of a set of servers that, in combination, store code of a particular module. The term memory hardware is a subset of the term computer-readable medium.

The apparatuses and methods described in this application may be partially or fully implemented by a special purpose computer created by configuring a general purpose computer to execute one or more particular functions embodied in computer programs. Such apparatuses and methods may be described as computerized or computer-implemented apparatuses and methods. The functional blocks and flowchart elements described above serve as software specifications, which can be translated into the computer programs by the routine work of a skilled technician or programmer.

The computer programs include processor-executable instructions that are stored on at least one non-transitory computer-readable medium. The computer programs may also include or rely on stored data. The computer programs may encompass a basic input/output system (BIOS) that interacts with hardware of the special purpose computer, device drivers that interact with particular devices of the special purpose computer, one or more operating systems, user applications, background services, background applications, etc.

The computer programs may include: (i) descriptive text to be parsed, such as HTML (hypertext markup language), XML (extensible markup language), or JSON (JavaScript Object Notation), (ii) assembly code, (iii) object code generated from source code by a compiler, (iv) source code for execution by an interpreter, (v) source code for compilation and execution by a just-in-time compiler, etc. As examples only, source code may be written using syntax from languages including C, C++, C#, Objective-C, Swift, Haskell, Go, SQL, R, Lisp, Java®, Fortran, Perl, Pascal, Curl, OCaml, Java-Script®, HTML5 (Hypertext Markup Language 5th revision), Ada, ASP (Active Server Pages), PHP (PHP: Hypertext Preprocessor), Scala, Eiffel, Smalltalk, Erlang, Ruby, Flash®, Visual Basic®, Lua, MATLAB, SIMULINK, and Python®.

The term non-transitory computer-readable medium does not encompass transitory electrical or electromagnetic signals propagating through a medium (such as on a carrier wave). Non-limiting examples of a non-transitory computer-readable medium are nonvolatile memory circuits (such as a flash memory circuit, an erasable programmable read-only memory circuit, or a mask read-only memory circuit), volatile memory circuits (such as a static random access memory circuit or a dynamic random access memory circuit), magnetic storage media (such as an analog or digital magnetic tape or a hard disk drive), and optical storage media (such as a CD, a DVD, or a Blu-ray Disc).

The term "set" generally means a grouping of one or more elements. The elements of a set do not necessarily need to have any characteristics in common or otherwise belong together. The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

1. A first embodiment is directed to a method of processing input radar signals received by a plurality of radar elements, the method comprising:

calculating a discrete Fourier transform (DFT) of the input radar signals;
identifying a peak amplitude of the DFT;
designating a frequency corresponding to the peak amplitude of the DFT as an initial frequency estimate;
selecting a first neighboring point of the DFT based on the initial frequency estimate;
selecting a second neighboring point of the DFT based on the initial frequency estimate;
generating a first value based on an amplitude of the first neighboring point of the DFT;
generating a second value based on an amplitude of the second neighboring point of the DFT;
calculating a generalized interpolation value based on a generalized discrete DFT interpolation, wherein the generalized discrete DFT interpolation is based on the first value, the second value, and the peak amplitude; and
generating a fine frequency estimate of the input radar signals by summing the initial frequency estimate and the generalized interpolation value.

2. A second embodiment in the first embodiment, further comprising determining an angle estimate based on the fine frequency estimate.

3. A third embodiment in the first embodiment, wherein:

the first neighboring point corresponds to a lower frequency than the initial frequency estimate; and
the second neighboring point corresponds to a higher frequency than the initial frequency estimate.

4. A fourth embodiment in the third embodiment wherein:

the DFT includes an ordered set of frequencies arranged from a lowest frequency to a highest frequency;
the ordered set of frequencies includes the initial frequency estimate, the lower frequency, and the higher frequency;
the lower frequency is immediately prior to the initial frequency estimate in the ordered set of frequencies; and
the higher frequency is immediately subsequent to the initial frequency estimate in the ordered set of frequencies.

5. A fifth embodiment in the first embodiment wherein generating the first value and generating the second value includes:

determining whether a set of phase adjustment criteria has been met; and
in response to a determination that the set of phase adjustment criteria has been met:

calculating a real component of the first neighboring point of the DFT, and
calculating a real component of the second neighboring point of the DFT.

6. A sixth embodiment in the fifth embodiment wherein generating the first value and generating the second value includes, in response to a determination that the set of phase adjustment criteria has not been met:

calculating an absolute value of the amplitude of the first neighboring point of the DFT, and
calculating an absolute value of the amplitude of the second neighboring point of the DFT.

7. A seventh embodiment in the fifth embodiment wherein:

the plurality of radar elements is $N$ radar elements;
the DFT has $K$ frequency points; and
the set of phase adjustment criteria includes a criterion that is met when $K$ is greater than or equal to $N$ and less than $2N$.

8. An eight embodiment in the first embodiment further comprising selectively performing a refinement operation, including:

selecting a third neighboring point of the DFT based on the initial frequency estimate, wherein the third neighboring point is between the first neighboring point and the initial frequency estimate;
selecting a fourth neighboring point of the DFT based on the initial frequency estimate, wherein the fourth neighboring point is between the second neighboring point and the initial frequency estimate;
generating a third value based on the amplitude of the first neighboring point and the third neighboring point;
generating a fourth value based on the amplitude of the second neighboring point and the fourth neighboring point;
determining a refined peak amplitude of the DFT based on the third value and the fourth value;
designating a second frequency corresponding to the refined peak amplitude as a refined initial frequency estimate;
calculating a refined generalized interpolation value based on a refined generalized discrete DFT interpolation, wherein the refined generalized discrete DFT interpolation is based on the third value, the fourth value, and the refined peak amplitude; and
generating a refined frequency estimate of the input radar signals by summing the refined initial frequency estimate and the refined generalized interpolation value.

9. A ninth embodiment in the eight embodiment wherein:

the plurality of radar elements is $N$ radar elements;
the DFT has $K$ frequency points; and
the refinement operation is performed only in response to a determination that $K$ is (i) greater than or equal to $N$ *and* (ii) less than $2N$.

10. A tenth embodiment in the ninth embodiment wherein the refinement operation is performed only in response to a determination that $K$ is (i) greater than $N$ and (ii) less than $2N$.

11. An eleventh embodiment in the ninth embodiment wherein the refinement operation is performed only in response to a configuration being present that enables the refinement operation.

12. A twelfth embodiment in the first embodiment wherein:

the plurality of radar elements is $N$ radar elements;
the DFT has $K$ frequency points; and
the generalized discrete DFT interpolation is based on $N$ and $K$.

13. A thirteenth embodiment in the twelfth embodiment wherein the generalized discrete DFT interpolation is based on:

a quotient of one over $K$;
the peak amplitude;
a sum of the first value and the second value; and
a difference of the first value and the second value.

14. A fourteenth embodiment in the thirteenth embodiment wherein:

the generalized discrete DFT interpolation is defined as

$$\delta = \frac{1}{\pi}\tan^{-1}\left(\frac{\left(S_{-x}^{\text{real}} - S_{+x}^{\text{real}}\right)\sin\pi x}{2\,S_{\max}\cos\pi N x - \left(S_{-x}^{\text{real}} + S_{+x}^{\text{real}}\right)\cos\pi x}\right);$$

$\delta$ is the generalized interpolation value;

$S_{-x}^{\text{real}}$ is the first value;

$S_{+x}^{\text{real}}$ is the second value;
$S_{\max}$ is the peak amplitude; and
$x$ is the quotient of one over $K$.

15. A fifteenth embodiment is directed to a system comprising:

memory hardware configured to store instructions;
processor hardware configured to execute the instructions, wherein the instructions include:

calculating a discrete Fourier transform (DFT) of input radar signals received by a plurality of radar elements;
identifying a peak amplitude of the DFT;
designating a frequency corresponding to the peak amplitude of the DFT as an initial frequency estimate;
selecting a first neighboring point of the DFT based on the initial frequency estimate;
selecting a second neighboring point of the DFT based on the initial frequency estimate;
generating a first value based on an amplitude of the first neighboring point of the DFT;
generating a second value based on an amplitude of the second neighboring point of the DFT;
calculating a generalized interpolation value based on a generalized discrete DFT interpolation, wherein the generalized discrete DFT interpolation is based on the first value, the second value, and the peak amplitude; and
generating a fine frequency estimate of the input radar signals by summing the initial frequency estimate and the generalized interpolation value.

16. A sixteenth embodiment in the fifteenth embodiment further comprising the plurality of radar elements.

17. A seventeenth embodiment is directed to a vehicle comprising the system of the fifteenth embodiment.

18. An eighteenth embodiment in the fifteenth embodiment wherein:

the first neighboring point corresponds to a lower frequency than the initial frequency estimate; and
the second neighboring point corresponds to a higher frequency than the initial frequency estimate.

19. A nineteenth embodiment in the fifteenth embodiment wherein:

the plurality of radar elements is $N$ radar elements;
the DFT has $K$ frequency points; and
the generalized discrete DFT interpolation is based on $N$ and $K$.

20. A twentieth embodiment in the nineteenth embodiment wherein the generalized discrete DFT interpolation is based on:

a quotient of one over $K$;
the peak amplitude;
a sum of the first value and the second value; and
a difference of the first value and the second value.

**Claims**

1. A method of processing input radar signals received by a plurality of radar elements, the method comprising:

calculating a discrete Fourier transform (DFT) of the input radar signals;
identifying a peak amplitude of the DFT;
designating a frequency corresponding to the peak amplitude of the DFT as an initial frequency estimate;
selecting a first neighboring point of the DFT based on the initial frequency estimate;
selecting a second neighboring point of the DFT based on the initial frequency estimate;
generating a first value based on an amplitude of the first neighboring point of the DFT;
generating a second value based on an amplitude of the second neighboring point of the DFT;
calculating a generalized interpolation value based on a generalized discrete DFT interpolation, wherein the generalized discrete DFT interpolation is based on the first value, the second value, and the peak amplitude; and
generating a fine frequency estimate of the input radar signals by summing the initial frequency estimate and the generalized interpolation value.

2. The method of claim 1 further comprising determining an angle estimate based on the fine frequency estimate.

3. The method of any one of the preceding claims wherein:

the first neighboring point corresponds to a lower frequency than the initial frequency estimate; and
the second neighboring point corresponds to a higher frequency than the initial frequency estimate, wherein preferably,

the DFT includes an ordered set of frequencies arranged from a lowest frequency to a highest frequency;
the ordered set of frequencies includes the initial frequency estimate, the lower frequency, and the higher frequency;
the lower frequency is immediately prior to the initial frequency estimate in the ordered set of frequencies; and
the higher frequency is immediately subsequent to the initial frequency estimate in the ordered set of frequencies.

4. The method of any one of the preceding claims wherein generating the first value and generating the second value includes:

determining whether a set of phase adjustment criteria has been met; and
in response to a determination that the set of phase adjustment criteria has been met:

calculating a real component of the first neighboring point of the DFT, and
calculating a real component of the second neighboring point of the DFT, wherein preferably,

generating the first value and generating the second value includes, in response to a determination that the set of phase adjustment criteria has not been met:

calculating an absolute value of the amplitude of the first neighboring point of the DFT, and
calculating an absolute value of the amplitude of the second neighboring point of the DFT; and/or

wherein preferably,
the plurality of radar elements is $N$ radar elements;
the DFT has $K$ frequency points; and
the set of phase adjustment criteria includes a criterion that is met when $K$ is greater than or equal to $N$ and less than $2N$.

5. The method of any one of the preceding claims further comprising selectively performing a refinement operation, including:

selecting a third neighboring point of the DFT based on the initial frequency estimate, wherein the third neighboring point is between the first neighboring point and the initial frequency estimate;
selecting a fourth neighboring point of the DFT based on the initial frequency estimate, wherein the fourth neighboring point is between the second neighboring point and the initial frequency estimate;
generating a third value based on the amplitude of the first neighboring point and the third neighboring point;
generating a fourth value based on the amplitude of the second neighboring point and the fourth neighboring point;
determining a refined peak amplitude of the DFT based on the third value and the fourth value;
designating a second frequency corresponding to the refined peak amplitude as a refined initial frequency estimate;
calculating a refined generalized interpolation value based on a refined generalized discrete DFT interpolation, wherein the refined generalized discrete DFT interpolation is based on the third value, the fourth value, and the refined peak amplitude; and
generating a refined frequency estimate of the input radar signals by summing the refined initial frequency estimate and the refined generalized interpolation value.

6. The method of claim 5 wherein:

the plurality of radar elements is *N* radar elements;
the DFT has *K* frequency points; and
the refinement operation is performed only in response to a determination that *K* is (i) greater than or equal to *N and* (ii) less than 2N, wherein
preferably,

the refinement operation is performed only in response to a determination that *K* is (i) greater than *N* and (ii) less than 2*N*; and/or
the refinement operation is performed only in response to a configuration being present that enables the refinement operation.

7. The method of any one of the preceding claims wherein:

the plurality of radar elements is *N* radar elements;
the DFT has *K* frequency points; and
the generalized discrete DFT interpolation is based on *N* and *K*.

8. The method of claim 7 wherein the generalized discrete DFT interpolation is based on:

a quotient of one over *K*;
the peak amplitude;
a sum of the first value and the second value; and
a difference of the first value and the second value.

9. The method of claim 8 wherein:

the generalized discrete DFT interpolation is defined as

$$\delta = \frac{1}{\pi}\tan^{-1}\left(\frac{\left(S_{-x}^{\mathrm{real}}-S_{+x}^{\mathrm{real}}\right)\sin\pi x}{2\,S_{\mathrm{max}}\cos\pi Nx - \left(S_{-x}^{\mathrm{real}}+S_{+x}^{\mathrm{real}}\right)\cos\pi x}\right);$$

$\delta$ is the generalized interpolation value;
$S_{-x}^{\mathrm{real}}$ is the first value;
$S_{+x}^{\mathrm{real}}$ is the second value;
$S_{\mathrm{max}}$ is the peak amplitude; and
*x* is the quotient of one over *K*.

10. A system comprising:

memory hardware configured to store instructions;
processor hardware configured to execute the instructions, wherein the instructions include:

calculating a discrete Fourier transform (DFT) of input radar signals received by a plurality of radar elements;
identifying a peak amplitude of the DFT;
designating a frequency corresponding to the peak amplitude of the DFT as an initial frequency estimate;
selecting a first neighboring point of the DFT based on the initial frequency estimate;
selecting a second neighboring point of the DFT based on the initial frequency estimate;
generating a first value based on an amplitude of the first neighboring point of the DFT;
generating a second value based on an amplitude of the second neighboring point of the DFT;
calculating a generalized interpolation value based on a generalized discrete DFT interpolation, wherein the generalized discrete DFT interpolation is based on the first value, the second value, and the peak amplitude; and
generating a fine frequency estimate of the input radar signals by summing the initial frequency estimate and the generalized interpolation value.

11. The system of claim 10 further comprising the plurality of radar elements.

12. The system of claim 10 wherein:

the first neighboring point corresponds to a lower frequency than the initial frequency estimate; and
the second neighboring point corresponds to a higher frequency than the initial frequency estimate.

13. The system of claim 10 wherein:

the plurality of radar elements is $N$ radar elements;
the DFT has $K$ frequency points; and
the generalized discrete DFT interpolation is based on $N$ and $K$.

14. The system of claim 13 wherein the generalized discrete DFT interpolation is based on:

a quotient of one over $K$;
the peak amplitude;
a sum of the first value and the second value; and
a difference of the first value and the second value.

15. A vehicle comprising the system of any one of claims 10 to 14.

## FIG. 1

Radar System

112

108

**Radar System 108**

Antenna Array 136

Transceiver 140

Processor Hardware 144

Memory Hardware 148

Radar Software 152

## FIG. 2A

Incoming Signal

204 — Transducer Module

208 — Signal Conditioning Module

212 — Preprocessing Module

214 — Sampling Module

216 — Intermediate Processing Module

218 — Frequency Estimation Module

Frequency Estimate

## FIG. 2B

Incoming Signals

230 — Sensor array

234 — Signal Conditioning Module

238 — Preprocessing Module

242 — Sampling Module

246 — Intermediate Processing Module

250 — Frequency Estimation Module

254 — Angle Estimation Module

Angle Estimate

FIG. 3A

FIG. 3B

FIG. 3C

FIG. 3D

EP 4 585 959 A1

SNR = 30 dB, $N = 6, K = 16$

GDI
Parabolic

$\times 10^{-3}$

RMSE (Hz/Hz)

f (Hz/Hz)

**FIG. 4B**

$f = 0.1$ Hz/Hz, $N = 6, K = 16$

GDI
Parabolic-1

RMSE (Hz/Hz)

SNR (dB)

**FIG. 4D**

SNR = 20 dB, $N = 6, K = 16$

GDI
Parabolic

$\times 10^{-3}$

RMSE (Hz/Hz)

f (Hz/Hz)

**FIG. 4A**

$f = -0.13$ Hz/Hz, $N = 6, K = 16$

GDI
Parabolic-1

RMSE (Hz/Hz)

SNR (dB)

**FIG. 4C**

**Default Mode**

$S_{-x}$  $S_{max}$  $S_{+x}$

amplitude

FFT bins

**FIG. 5A**

**K = N Mode**

$S_{-x}$  $S_{max}$  $S_{+x}$

amplitude

FFT bins

**FIG. 5B**

**Refine Mode**

$S_{-x}$  $S_{max}$  $S_{+x}$

amplitude

FFT bins

**FIG. 5C**

SNR = 20 dB, N =4, K =4

FIG. 6A

SNR = 30 dB, N =4, K =4

FIG. 6B

$f$ =0.04 Hz/Hz, $N$ = 4, $K$ =4

FIG. 6C

$f$ =0.1 Hz/Hz, $N$ = 4, $K$ =4

FIG. 6D

FIG. 7A

FIG. 7B

FIG. 7C

FIG. 7D

**FIG. 8**

FIG. 9A

FIG. 9B

FIG. 9C

FIG. 9D

FIG. 10A

FIG. 10B

FIG. 10C

FIG. 10D

```
                          ┌─────────────┐
                          │    Start    │
                          └──────┬──────┘
                                 │
                                 ▼
        1104 ───┐   ┌──────────────────────────┐
                    │   Receive input radar     │
                    │        signals            │
                    └────────────┬──────────────┘
                                 │
                                 ▼
        1108 ───┐   ┌──────────────────────────┐
                    │    Perform coarse DFT      │
                    └────────────┬──────────────┘
                                 │
                                 ▼
        1112 ───┐   ┌──────────────────────────┐
                    │   Determine FT peak        │
                    │  and initial frequency     │
                    │       estimate             │
                    └────────────┬──────────────┘
                                 │
                                 ▼
        1116 ───┐   ┌──────────────────────────┐
                    │  Determine neighboring     │
                    │    points of FT peak       │
                    └────────────┬──────────────┘
                                 │
                                 ▼
        1120 ───┐        ◇─────────────◇
                        ╱  N < K < 2N?  ╲──── Y ───┐
                        ╲               ╱          │
                         ◇─────────────◇           ▼
                                │                1124 ───┐  ◇─────────────◇
                                N              ╱  Refine Mode  ╲──── Y ───┐
                                │              ╲   enabled?    ╱          │
                                │               ◇─────────────◇           │
                                │                      │                  ▼
                                │                      N         1128 ───┐
                                │                      │   ┌──────────────────────┐
                                │◄─────────────────────┴───│  Refine neighboring   │
                                │                          │  points and FT peak   │
                                ▼                          └──────────────────────┘
                          ┌─────────────┐
                          │   To 11B    │
                          └─────────────┘
```

## FIG. 11A

From 11A

1132 — $N \leq K < 2N?$

N

Y

1136 — Generate first and second values based on real part of neighboring points

1140 — Generate first and second values based on absolute value of neighboring points

1144 — Find delta based on first and second values

1148 — Sum delta and initial frequency estimate to generate fine frequency estimate

1152 — Estimate angle based on frequency estimate

Start

# FIG. 11B

Europäisches
Patentamt

European
Patent Office

Office européen
des brevets

# EUROPEAN SEARCH REPORT

**Application Number**

EP 24 20 9681

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/079181 A1 (GENESYS DESIGN PTY LTD [AU]; REISENFELD SAM [AU]; TSUI JEFFREY [AU]) 3 August 2006 (2006-08-03) | 1-8, 10-15 | INV. G01S7/35 G01S13/931 |
| A | * page 3, line 20 - line 30; page 12, line 16 - line 18; page 16, line 16 - page 17, line 4; equation 5; figures 7, 54 * | 9 | |
| X | FANG LUOYANG ET AL: "Error floor elimination for DFT-based frequency estimators", 21ST EUROPEAN SIGNAL PROCESSING CONFERENCE (EUSIPCO 2013), EURASIP, 9 September 2013 (2013-09-09), pages 1-5, XP032593616, [retrieved on 2014-05-07] * equation 7; pages 1, 2 * | 1,3,8 | |
| A | US 2021/364626 A1 (SCHOOR MICHAEL [DE]) 25 November 2021 (2021-11-25) * paragraphs [0001], [0026], [0037] * | 1-15 | |
| A | CAGATAY CANDAN: "Analysis and Further Improvement of Fine Resolution Frequency Estimation Method From Three DFT Samples", IEEE SIGNAL PROCESSING LETTERS, IEEE, USA, vol. 20, no. 9, 1 September 2013 (2013-09-01), pages 913-916, XP011522126, ISSN: 1070-9908, DOI: 10.1109/LSP.2013.2273616 * page 913 * | 1,10 | |

**TECHNICAL FIELDS SEARCHED (IPC)**

G01S

The present search report has been drawn up for all claims

| Place of search | Date of completion of the search | Examiner |
|---|---|---|
| Munich | 4 April 2025 | Kirscher, Jérôme |

EPO FORM 1503 03.82 (P04C01)

## ANNEX TO THE EUROPEAN SEARCH REPORT
## ON EUROPEAN PATENT APPLICATION NO.

EP 24 20 9681

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | Publication date | Patent family member(s) | Publication date |
|---|---|---|---|
| WO 2006079181 A1 | 03-08-2006 | NONE | |
| US 2021364626 A1 | 25-11-2021 | CN 111712726 A | 25-09-2020 |
| | | DE 102018202289 A1 | 22-08-2019 |
| | | EP 3752858 A1 | 23-12-2020 |
| | | JP 7130048 B2 | 02-09-2022 |
| | | JP 2021513657 A | 27-05-2021 |
| | | KR 20200120686 A | 21-10-2020 |
| | | US 2021364626 A1 | 25-11-2021 |
| | | WO 2019158252 A1 | 22-08-2019 |

EPO FORM P0459

For more details about this annex : see Official Journal of the European Patent Office, No. 12/82